# EUROPÄISCHE PATENTSCHRIFT

(11) **EP 2 707 208 B1**
(45) Veröffentlichungstag und Bekanntmachung des Hinweises auf die Patenterteilung: **05.01.2022**
(21) Anmeldenummer: 12719261.5
(22) Anmeldetag: 19.04.2012
(51) Int. Cl.: B30B 11/00, B30B 11/08

(54) **VORRICHTUNG UND VERFAHREN ZUM KALIBRIEREN UND ABGLEICHEN EINER MESSEINRICHTUNG EINER TABLETTENPRESSE**
DEVICE AND METHOD FOR CALIBRATING AND ADJUSTING A MEASUREMENT SYSTEM IN A TABLET PRESS
DISPOSITIF ET PROCÉDÉ D'ÉTALONNAGE ET D'AJUSTEMENT D'UN DISPOSITIF DE MESURE D'UNE PRESSE À COMPRIMÉS

(30) Priorität: 10.05.2011 DE 102011101294
(43) Veröffentlichungstag der Anmeldung: 19.03.2014
(73) Patentinhaber: Fette Compacting GmbH, 21493 Schwarzenbek (DE)
(72) Erfinder: SCHMIDT, Ingo, 21493 Schwarzenbek (DE); GATHMANN, Ulrich, 22147 Hamburg (DE); MEIER, Matthias, 21493 Schwarzenbek (DE)
(74) Vertreter: Hauck Patentanwaltspartnerschaft mbB
(86) Internationale Anmeldenummer: PCT/EP2012/001689
(87) Internationale Veröffentlichungsnummer: WO 2012/152373

(56) Entgegenhaltungen:
- EP-A2- 1 714 775
- US-A- 5 229 044
- US-B1- 6 325 609
- BELDA P M ET AL: "The tabletting machine as an analytical instrument: qualification of the measurement devices for punch forces and validation of the calibration procedures", EUROPEAN JOURNAL OF PHARMACEUTICS AND BIOPHARMACEUTICS, ELSEVIER SCIENCE PUBLISHERS B.V., AMSTERDAM, NL, Bd. 46, Nr. 3, 1. November 1998 (1998-11-01), Seiten 381-395, XP004257015, ISSN: 0939-6411, DOI: 10.1016/S0939-6411(98)00027-7

## Beschreibung

Die Erfindung betrifft eine Vorrichtung und ein Verfahren zum Kalibrieren und Abgleichen einer Messeinrichtung einer Tablettenpresse, insbesondere einer Rundläufer-Tablettenpresse. Eine Rundläufer-Tablettenpresse besitzt üblicherweise einen Rotor, der über eine in der Regel vertikale Achse mit einem geeigneten Antriebsmotor drehend angetrieben wird. Der Rotor besitzt eine obere und untere Stempelführung zur Aufnahme von Ober- und Unterstempeln. Die Stempel wirken mit Aufnahmen einer Matrizenscheibe zusammen, die zwischen den Stempelführungen angeordnet ist. Über geeignete Fülleinrichtungen wird den Aufnahmen der Matrizenscheibe Pressmaterial zugeführt. Die Ober- bzw. Unterstempel wirken in Druckstationen mit oberen und unteren Druckrollen zusammen, um das in die Aufnahmen gefüllte Pressmaterial zu einer Tablette zu komprimieren. In der Regel sind geeignete Steuerkurvenabschnitte vorgesehen, die die Stempel über ihre Stempelköpfe in axialer Richtung führen. Beispielsweise ist einer Füllstation ein Füllkurvenabschnitt zugeordnet, der dafür sorgt, dass die Unterstempel im Bereich des Füllkurvenabschnitts ein vorgegebenes Maß in die Aufnahmen hinein stehen. Dieses Maß bestimmt das Füllvolumen und damit auch das Gewicht der verpressten Tablette. In einem in Drehrichtung dahinter angeordneten Abstreifbereich werden die gepressten Tabletten von der Oberseite der Matrizenscheibe abgestreift. Hierzu ist in der Regel eine Führungskurve vorgesehen, durch die die Unterstempel so weit angehoben werden, dass die Tabletten von dem Abstreifer erfasst und abgeschoben werden können, beispielsweise in einen Ablaufkanal. Außerdem sorgt in der Regel ein geeigneter Steuerkurvenabschnitt dafür, dass die Oberstempel über eine Füllvorrichtung hinweggeführt werden. Eine solche Tablettenpresse ist beispielsweise aus DE 10 2004 040 163 C5 bekannt.

### BESTÄTIGUNGSKOPIE

Es ist bekannt, derartige Rundläufertablettenpressen mit unterschiedlichen Messeinrichtungen bzw. Sensoren auszustatten. Die Messeinrichtungen wandeln physikalische Messgrößen in elektrische Signale um, welche dann der Maschinensteuerung der Rundläuferpresse zugeführt und dort weiterverarbeitet und/oder zur Anzeige gebracht werden. Die Messsignale der Messeinrichtungen können beispielsweise den ordnungsgemäßen Zustand der Rundläuferpresse signalisieren. Andererseits können sie Messwerte zur Qualitätsbestimmung der in der Presse verpressten Presslinge, insbesondere Tabletten liefern. Den Zustand der Presse können beispielsweise Messsensoren für die Schwergängigkeit der oberen und unteren Pressstempel in der Stempelführung und/oder für die Tablettenausstoßkraft signalisieren. Eine Qualitätsbestimmung der hergestellten Tabletten erfolgt beispielsweise über eine Presskraftmessung an der Vor- und/oder Hauptdruckstation.

Um den strengen Anforderungen im Bereich der Pharmaproduktion zu entsprechen, müssen die Messeinrichtungen regelmäßig kalibriert und abgeglichen werden, damit eine kontinuierlich ausreichende Messgenauigkeit und damit Produktionsqualität gewährleistet ist. Die Ergebnisse dieser Kalibrierung werden üblicherweise in Form einer Messtabelle dokumentiert. Beispielsweise zur Kalibrierung von im Bereich der Druckrollen angeordneten Messeinrichtungen wird zwischen den oberen und unteren Druckrollen eine zusätzliche Referenzkraftmesseinrichtung (bestehend aus einem Sensor und einem Messgerät, insbesondere einem Messverstärker) installiert. Manuell wird dann beispielsweise der Abstand zwischen der oberen und unteren Druckrolle mittels der Verstellantriebe der Presse schrittweise verringert. Dabei werden sowohl die Messeinrichtung als auch die Referenzkraftmesseinrichtung unterschiedlichen Kraftwerten ausgesetzt. Jeder neue Kraftwert im Zuge der Kalibrierung wird manuell angefahren und von einem Bediener an den Messeinrichtungen, insbesondere der zu kalibrierenden Messeinrichtung, also insbesondere einer fest in die Presse eingebauten Messeinrichtung, und der Referenzkraftmesseinrichtung, abgelesen. Die Anzahl der Kalibrierschritte wird üblicherweise durch eine Verfahrensanweisung vorgegeben. Nach jedem Kalibrierschritt wird ein Vergleich zwischen den Messwerten der zu kalibrierenden Messeinrichtung und der Referenzmesseinrichtung durchgeführt. Bei unzulässigen Abweichungen wird ebenfalls manuell beispielsweise der Verstärkungsfaktor eines Messverstärkers der Messeinrichtung neu eingestellt, also abgeglichen. Die abschließend eingestellten Werte werden in einem Protokollformular protokolliert. Üblicherweise werden dabei manuell mehrere Messpunkte innerhalb eines Kraftbereichs angefahren.

Nachteilig bei dieser Vorgehensweise ist, dass es zu Ablesefehlern durch die Bedienperson kommen kann. Außerdem kann es zu Fehlern bei dem manuellen Abgleich der Messeinrichtung und der Protokollierung kommen. Das beschriebene Verfahren ist darüber hinaus zeitaufwendig und punktuelle Abweichungen und Nichtlinearitäten, bedingt beispielsweise durch Maschinentoleranzen von z.B. Lagern und Führungen, werden in der Regel nicht erkannt. Dasselbe gilt für Einflussgrößen auf die Messeinrichtungen, die während des Betriebes der Rundläuferpresse auftreten, beispielsweise Temperaturschwankungen, Verschleiß oder andere Störgrößen.

US 5,229,044 A beschreibt ein Verfahren zum Überprüfen eines Kraftaufnehmers in einer Tablettenpresse, wobei eine Dummy-Matrize anstelle einer echten Matrize in eine ausgewählte Matrizenaufnahme eingesetzt wird. Zudem sind ein Referenzkraftaufnehmer sowie Druckstangen anstelle von Stößeln vorgesehen, die durch ein Paar Druckrollen auf die Kraftaufnehmer wirken. Die über die Druckrollen auf die Druckstangen ausgeübte Kompressionskraft wird von dem Kraftaufnehmer sowie dem Referenzkraftaufnehmer erfasst, wobei der von dem Kraftaufnehmer aufgenommene Wert um den von dem Referenzkraftaufnehmer aufgenommenen Wert korrigiert wird.

US 6,325,600 B1 offenbart eine Vorrichtung zum Kalibrieren und Abgleichen einer Messeinrichtung einer Tablettenpresse gemäß dem Oberbegriff des Anspruchs 1, es beschreibt eine Pulverpresse mit Messmitteln zum Messen des Gewichts und der Dicke von Tabletten. Sofern die gemessenen Werte von Gewicht und Dicke der Tabletten innerhalb definierter Toleranzgrenzen liegen, wird der zu diesem Zeitpunkt gemessene Druckwert als Referenzwert für spätere Druckmessungen festgelegt.

EP 1 714 775 A2 offenbart ein Verfahren bzw. eine Vorrichtung zur Überwachung der Schwergängigkeit der Stempel einer Presse aufgrund von Reibungskräften. Hierfür sind Sensoren vorgesehen, die eine Bewegung der Stempel detektieren und mit einem Steuergerät verbunden sind. Sollten im Pressbetrieb gefährlich hohe Reibungskräfte auftreten, so kann das Steuergerät auf Grundlage der Messwerte der Sensoren die Presse außer Betrieb setzen.

Aus BELDA P M et al: "The tabletting machine as an analytical instrument: qualification of the measurement devices for punch forces and validation of the calibration procedures", European Journal of Pharmaceutics and Biopharmaceutics, Elsevier Science Publishers B.V., Amsterdam, NL, Bd. 46, Nr. 3, 1. November 1998, Seiten 381-395 ist eine Untersuchung von Einflussgrößen auf Messergebnisse von Kraftsensoren von Tablettenpressen bekannt. Dabei werden Messergebnisse der Messsensoren mit Referenzmessergebnissen von Referenzmesseinrichtungen verglichen. Aus dem Vergleich sollen Erkenntnisse über relevante Einflussfaktoren auf die Messergebnisse der Messeinrichtungen im praktischen Betrieb von Tablettenpressen gewonnen werden.

Ausgehend von dem beschriebenen Stand der Technik liegt der Erfindung daher die Aufgabe zugrunde, eine Vorrichtung und ein Verfahren der eingangs genannten Art bereitzustellen, mit denen eine genaue und sichere Kalibrierung und Abgleichung der Messeinrichtungen in einfacher und schneller Weise möglich ist.

Die Erfindung löst diese Aufgabe durch den Gegenstand der Ansprüche 1 und 6. Vorteilhafte Ausgestaltungen finden sich in den abhängigen Ansprüchen, der Beschreibung und den Figuren.

Die Erfindung löst die Aufgabe zum einen durch eine Vorrichtung zum Kalibrieren und Abgleichen einer Messeinrichtung einer Tablettenpresse, insbesondere einer Rundläufer-Tablettenpresse, umfassend mindestens eine Referenzmesseinrichtung und mindestens eine Steuereinrichtung, wobei Schnittstellen der Steuereinrichtung mit Schnittstellen der Messeinrichtung und der Referenzmesseinrichtung verbunden sind, wobei die Steuereinrichtung dazu ausgebildet ist, eine Mehrzahl von Referenzmessereignissen zu erzeugen und die zugehörigen Messwerte der Messeinrichtung und der Referenzmesseinrichtung aufzunehmen, wobei die Steuereinrichtung weiterhin eine Vergleichseinrichtung umfasst, mit der die aufgenommenen Messwerte der Messeinrichtung und der Referenzmesseinrichtung miteinander verglichen werden können, und wobei die Steuereinrichtung dazu ausgebildet ist, die Messeinrichtung abzugleichen, sofern eine unzulässige Abweichung zwischen den verglichenen Messwerten vorliegt. Hierzu kann eine Schnittstelle der Steuereinrichtung mit der Messeinrichtung verbunden sein. Eine unzulässige Abweichung ist regelmäßig dann gegeben, wenn eine vor der Kalibrierung festgelegte zulässige Differenz zwischen dem Messwert der zu kalibrierenden Messeinrichtung und dem zugeordneten Messwert der Referenzkraftmesseinrichtung überschritten ist. Die erfindungsgemäße Steuereinrichtung kann dabei für den Abgleich einer zu überprüfenden Messeinrichtung bzw. der Kompensation der festgestellten Abweichungen ausgebildet sein.

Die Erfindung löst die Aufgabe zum anderen durch ein Verfahren zum Kalibrieren und Abgleichen einer Messeinrichtung einer Tablettenpresse, insbesondere einer Rundläufer-Tablettenpresse, umfassend die Schritte: mindestens eine Referenzmesseinrichtung wird bereitgestellt, von einer Steuereinrichtung wird eine Mehrzahl von Referenzmessereignissen erzeugt und die zugehörigen Messwerte der Messeinrichtung und der Referenzmesseinrichtung werden von der Steuereinrichtung aufgenommen, mittels der Steuereinrichtung werden die aufgenommenen Messwerte der Messeinrichtung und der Referenzmesseinrichtung miteinander verglichen, sofern eine unzulässige Abweichung zwischen den verglichenen Messwerten festgestellt wird, wird die Messeinrichtung von der Steuereinrichtung abgeglichen. Wiederum liegt eine unzulässige Abweichung regelmäßig dann vor, wenn eine vor der Kalibrierung festgelegte zulässige Differenz zwischen dem Messwert der zu kalibrierenden Messeinrichtung und dem zugeordneten Messwert der Referenzkraftmesseinrichtung überschritten ist. Im Rahmen des bei dem erfindungsgemäßen Verfahren durchgeführten Abgleichs können die bei der Kalibrierung festgestellten Abweichungen kompensiert werden.

Die Schnittstellen können digitale Schnittstellen, analoge Schnittstellen oder andere Dateninterfaces sein. Erfindungsgemäß erfolgt durch die Steuereinrichtung also eine automatische Kalibrierung und Abgleichung der betreffenden Messeinrichtungen. Eine manuelle Kalibrierung und Abgleichung mit den zum Stand der Technik erläuterten Nachteilen ist erfindungsgemäß nicht erforderlich. Vielmehr muss erfindungsgemäß lediglich der Kalibrier- und Abgleichvorgang durch eine Bedienperson ausgelöst werden, wobei anschließend die Kalibrier- und Abgleichschritte automatisch durchlaufen werden. Erfindungsgemäß wird dazu gesteuert durch die Steuereinrichtung eine Vielzahl von Referenzmesssignalen bzw. -werten erzeugt, die von der Messeinrichtung und der Referenzmesseinrichtung aufgenommen werden. Es kann vorgesehen sein, dass mindestens eine Schnittstelle der Steuereinrichtung mit mindestens einer Einrichtung zur Erzeugung von Referenzmessereignissen verbunden ist. Die Steuereinrichtung kann diese Einrichtung dann so ansteuern, dass sie die Referenzmessereignisse erzeugt.

Die Referenzmessereignisse können in an sich bekannter Weise erzeugt werden. Im Gegensatz zum Stand der Technik geschieht dies erfindungsgemäß allerdings automatisiert. Handelt es sich bei der Messeinrichtung beispielsweise um eine Kraftmesseinrichtung an einer oberen oder unteren Druckrolle der Presse, so können unterschiedliche Referenzkraftwerte beispielweise durch Einsetzen eines Probensatzes eines Ober- und Unterstempels, eines sogenannten oberen und unteren Kalibrierstempels, anstelle der im Betrieb eingesetzten Ober- und Unterstempel erzeugt werden, wobei die Druckrollen durch die Steuereinrichtung mittels Ansteuerung geeigneter Druckrollenantriebe, insbesondere geeigneter Verstellmotoren, in unterschiedliche vertikale Positionen verfahren werden. Dadurch wird insbesondere der vertikale Abstand zwischen oberer und unterer Druckrolle verringert. Die Kraftmesseinrichtungen messen dann jeweils entsprechend der angefahrenen vertikalen Position unterschiedliche Kraftwerte. Bei Messeinrichtungen, beispielsweise Kraftmesseinrichtungen, an denen im normalen Betrieb der Tablettenpresse keine motorische Zustellung vorgesehen ist, werden die Referenzmessereignisse, beispielsweise die Referenzkraftwerte, mit anderen entsprechend zusätzlich vorzusehenden Zustelleinrichtungen oder ähnlichem beaufschlagt, um so den Kalibriermessbereich durchfahren zu können. Auch in einem solchen Fall wird zwischen der Messeinrichtung, beispielsweise einem Kraftsensor, und einem Gegenhaltepunkt eine entsprechende Referenzmesseinrichtung installiert.

Die Referenzmesssignale bzw. -werte können insbesondere schrittweise oder kontinuierlich in einem vorgegebenen Bereich verändert werden. Handelt es sich bei den Messeinrichtungen beispielweise um Kraftmesseinrichtungen, kann beispielsweise ein vorgegebener Kraftbereich kontinuierlich durchlaufen werden. Ein solcher Kraftbereich kann beispielsweise zwischen 0 und 100 kN liegen. Auf diese Weise werden auch punktuelle Abweichungen bzw. Nichtlinearitäten weitestgehend erkannt und können bei der Kalibrierung und Abgleichung berücksichtigt werden.

Die von der Messeinrichtung und von der Referenzmesseinrichtung gemessenen Referenzmessereignisse werden über die Verbindung ihrer Schnittstellen der Steuereinrichtung übergeben. Die Referenzmesseinrichtung ist für die erfindungsgemäße Kalibrierung und Abgleichung über ein Kommunikationsinterface mit der Steuereinrichtung verbunden. Die Vergleichseinrichtung der Steuereinrichtung vergleicht die jeweils zu einem Referenzmessereignis aufgenommenen Messwerte der Messeinrichtung und der Referenzmesseinrichtung und ermittelt beispielsweise durch Differenzbildung eine Abweichung zwischen den Messwerten. Sofern diese Abweichung eine vorgegebene Grenzabweichung überschreitet, ist sie unzulässig und die Messeinrichtung wird abgeglichen.

Die Steuereinrichtung kann eine Speichereinrichtung umfassen, in der die von der Referenzmesseinrichtung und der Messeinrichtung im Zuge der Kalibrierung jeweils aufgenommenen Messwerte gespeichert werden können. Auf diese Weise ist eine automatisierte und vollständige Dokumentation der Kalibrier- und Abgleichvorgänge möglich.

Mit der erfindungsgemäßen automatisierten Kalibrierung und Abgleichung können Ablesefehler und Fehler bei einer manuellen Korrektur der Referenzmesseinrichtungen vermieden werden. Dasselbe gilt hinsichtlich der Dokumentationserstellung. Gleichzeitig erfolgt die erfindungsgemäße Kalibrierung und Abgleichung in einfacher und schneller Weise, wobei insbesondere bei einem kontinuierlichen Durchfahren eines Referenzmessbereichs auch punktuelle Abweichungen und Nichtlinearitäten korrigiert werden können.

Der Begriff Kalibrierung umfasst in diesem Zusammenhang den Vergleich der Messwerte (Istwerte) der Messeinrichtung mit den durch die Referenzmesseinrichtung vorgegebenen Sollmesswerten und das Ermitteln einer eventuellen Abweichung zwischen den Messwerten und den Sollmesswerten. Die Kalibrierung kann auch eine Dokumentation der Vergleichsergebnisse umfassen. Anschließend erfolgt erfindungsgemäß ein Abgleich bzw. eine Justierung, sofern die Kalibrierung eine unzulässige Abweichung der Messwerte von den Sollmesswerten ergeben hat. Die Steuereinrichtung kann dazu ausgebildet sein, die Messeinrichtung durch einen Eingriff in die Messergebnisse der Messeinrichtung abzugleichen. Derartige Messeinrichtungen umfassen in der Regel mindestens einen Sensor und mindestens einen Messverstärker. Der Abgleich kann dann beispielsweise durch eine geeignete Einstellung bzw. Justierung des Messverstärkers erfolgen. Hierzu kann mindestens eine Schnittstelle der Steuereinrichtung mit einer Schnittstelle des Messverstärkers verbunden sein. Die Messverstärker können sich beispielsweise innerhalb eines Kraftaufnehmers oder außerhalb desselben befinden. Im letztgenannten Falle kann der Messverstärker innerhalb oder außerhalb der Steuereinrichtung angeordnet sein. Die Steuereinrichtung kann auch integraler Teil des Messverstärkers sein. Erfindungsgemäß ist die Steuereinrichtung dazu ausgebildet, die Messeinrichtung durch Hinterlegung einer Anpassungsvorschrift für die Messergebnisse der Messeinrichtung abzugleichen. In diesem Fall wird durch die Steuereinrichtung also kein direkter Einfluss auf die Messergebnisse genommen, beispielsweise durch Einstellung eines Messverstärkers. Vielmehr wird auf Grundlage des bei der Kalibrierung erfolgten Vergleichs eine Anpassungsvorschrift in Form einer Kennlinie oder eines Kennfeldes automatisch erstellt und hinterlegt. Die Anpassungsvorschrift wird in der Steuereinrichtung gespeichert. Beim nachfolgenden Betrieb werden die Messergebnisse der Messeinrichtung dann mit der Anpassungsvorschrift rechnerisch angepasst, so dass die im Rahmen der Kalibrierung festgestellte Abweichung zwischen den Messwerten der Messeinrichtung und der Referenzmesseinrichtung kompensiert wird. Auch wenn im Rahmen des Abgleichs ein direkter Eingriff auf die Messergebnisse der Messeinrichtung genommen wird, kann als Ergebnis der Kalibrierung von der Steuereinrichtung eine solche Anpassungsvorschrift erstellt werden. In diesem Fall bildet die Anpassungsvorschrift die Grundlage für die anschließende Neueinstellung der Messeinrichtung, beispielsweise eines Messverstärkers. Es ist also möglich, dass die erfindungsgemäße Vorrichtung lediglich den automatisierten Vergleich der Messwerte und die automatisierte Dokumentation der Vergleichsergebnisse durchführt, die dann anschließend im Rahmen einer Anpassungsvorschrift verwertet wird.

Wie bereits erwähnt, können die Messeinrichtung und die Referenzmesseinrichtung Kraftmesseinrichtungen sein. Die Referenzkraftmesseinrichtung, insbesondere ein Referenzkraftaufnehmer oder Referenzkraftsensor, liegt dann vorzugsweise in der gleichen, insbesondere unverzweigten, Kraftflussrichtung wie die zu kalibrierende und abzugleichende, fest in die Tablettenpresse eingebaute Messeinrichtung, beispielsweise ein fest eingebauter Kraftaufnehmer oder Kraftsensor. Die Messeinrichtung kann beispielsweise den Zustand der Tablettenpresse oder die Qualität der mit der Presse verpressten Tabletten anzeigen. Den Zustand der Tablettenpresse können beispielsweise Messeinrichtungen für die Schwergängigkeit der oberen und unteren Pressstempel in der Stempelführung und/oder für eine Tablettenausstoßkraft signalisieren. Eine Qualitätsbestimmung der Tabletten kann beispielsweise über eine Presskraftmessung an den Druckstationen der Tablettenpresse erfolgen.

Die Steuereinrichtung kann Teil der Maschinensteuerung der Tablettenpresse sein. Die Maschinensteuerung umfasst in der Regel eine Steuer- und eine Bedieneinheit. Sie dient zum Steuern des gesamten Betriebs der Tablettenpresse. Bei dieser Ausgestaltung ist also die Steuereinrichtung Teil der Maschinensteuerung, so dass keine weitere Steuereinrichtung erforderlich ist. In besonders vorteilhafter Weise hat die Maschinensteuerung in der Regel bereits Zugriff auf Komponenten der Tablettenresse, beispielsweise Verstellmotoren für die oberen und unteren Druckrollen, und kann so in besonders einfacher Weise die Referenzmessereignisse erzeugen. Es ist alternativ jedoch auch möglich, dass das erfindungsgemäße Kalibrier- und Abgleichverfahren durch eine von der Maschinensteuerung der Tablettenpresse getrennte Steuereinrichtung erfolgt, die in die Messeinrichtung oder in die Referenzmesseinrichtung integriert ist, beispielsweise in einen Messverstärker der Messeinrichtung.

Die Steuereinrichtung kann weiterhin dazu ausgebildet sein, aus den aufgenommenen Messwerten der Messeinrichtung jeweils eine Messkurve zu erstellen und die Messeinrichtung so abzugleichen, dass die erstellten Messkurven nach dem Abgleich innerhalb vorgegebener Toleranzgrenzen übereinstimmen. Die Messkurve der jeweiligen Messeinrichtung wird gewonnen, indem die Messwerte der zu kalibrierenden Messeinrichtung über dem ihnen jeweils zugeordneten Referenzmesswert aufgetragen werden. Die Referenzkurve kann erhalten werden, indem der jeweils gewonnene Referenzmesswert der Referenzmesseinrichtung über sich selbst aufgetragen wird. Abgesehen von einer möglichen Besonderheit im Bereich des Ursprungs, die darin bestehen kann, dass bei einem Referenzsollmesswert gleich Null die Referenzmesseinrichtung einen von Null verschiedenen Messwert generiert, weil ohne voreingestellte Krafteinwirkung von den Druckrollen auf die Kalibrierstempel, beispielsweise durch Eigengewicht des oberen Kalibrierstempels oder durch andere Einflussgrößen, auf den Referenzmesssensor eine Krafteinwirkung generiert wird, zeigt die Referenzkurve grundsätzlich einen linear proportionalen Verlauf, der gegenüber dem Ursprung im vorstehenden Sinne verschoben sein kann. Die Messkurve der Messeinrichtung kann von der Referenzkurve der Referenzmesseinrichtung abweichen. Diese Abweichung kann in der Steuereinrichtung gespeichert und mittels mathematischer Verfahren zur Kompensation verrechnet werden, so dass der bei der Messeinrichtung gemessene Messverlauf dem Sollmessverlauf, nämlich der aufgenommenen Referenzkurve der Referenzmesseinrichtung, möglichst nahekommt. Hierzu können geeignete Toleranzgrenzen um die Referenzkurve vorgegeben werden.

Um einen bereits durchgeführten Abgleich zu überprüfen, kann vorgesehen sein, dass nach der Kalibrierung und Abgleichung der Messeinrichtung das erfindungsgemäße Verfahren erneut durchlaufen wird.

Die Kalibrierung und Abgleichung der Messeinrichtung kann weiterhin in Abhängigkeit von mindestens einer im Betrieb der Tablettenpresse auftretenden Einflussgröße erfolgen, die einen Einfluss auf die Messeinrichtung, insbesondere ihre Messergebnisse hat. Beispiele für solche Einflussgrößen sind im Betrieb der Tablettenpresse auftretende Temperaturschwankungen, ein Verschleiß von Komponenten der Tablettenpresse oder ähnliche Einflussgrößen. Durch solche Einflussgrößen kann sich der korrekt kalibrierte und abgeglichene Zusammenhang zwischen einem Messereignis und einem angezeigten Messwert der Messeinrichtung verändern. Hierdurch wird eine neue Kalibrierung und Abgleichung der Messeinrichtung erforderlich. Sofern der Einfluss solcher Größen, beispielsweise einer Temperaturschwankung und einer damit verbundenen Längenänderung oder Verspannung von Pressstempeln oder anderen Komponenten, bekannt ist, kann ohne Durchführung einer zusätzlichen Kalibrierung und Abgleichung dieser Einfluss bei der Auswertung der Messergebnisse der Messeinrichtung berücksichtigt werden. Es ist dann möglich, im normalen Betrieb der Tablettenpresse die Messergebnisse der Messeinrichtungen quasi dynamisch an das Auftreten solcher Einflussgrößen anzupassen. Solche Einflussgrößen können empirisch oder theoretisch oder messtechnisch ermittelt werden. So kann beispielsweise empirisch ermittelt werden, welche Temperaturschwankungen im Verlauf eines normalen Betriebs der Tablettenpresse auftreten und direkt oder indirekt auf die Messeinrichtungen wirken. Ein Verschleiß einzelner Komponenten der Tablettenpresse, beispielsweise der Pressstempel, kann beispielsweise theoretisch ermittelt werden und einer dynamischen Anpassung der Messwerte zugrunde gelegt werden.

Nach einer weiteren Ausgestaltung kann das erfindungsgemäße Kalibrier- und Abgleichverfahren in regelmäßigen größeren Zeitabständen wiederholt werden. Auf diese Weise ist es möglich, auch tendenzielle Veränderungen der Messeinrichtungen bzw. ihrer Messwerte zu erkennen und auszuwerten bzw. entsprechend zu berücksichtigen. Größere Zeiträume bedeuten in diesem Zusammenhang beispielsweise mehrere Wochen oder mehrere Monate. So kann beispielsweise in regelmäßigen Abständen von mehreren Wochen oder mehreren Monaten eine Kalibrierung und Abgleichung durchgeführt werden. Diese wiederholte Kalibrierung und Abgleichung kann über die gesamte Standzeit der Tablettenpresse erfolgen. Hierzu kann eine Langzeitspeicherung der Ergebnisse des Verfahrens zum Kalibrieren und Abgleichen erfolgen.

Die erfindungsgemäße Vorrichtung ist insbesondere zur Durchführung des erfindungsgemäßen Verfahrens geeignet. Die Erfindung betrifft auch eine Tablettenpresse, insbesondere eine Rundläufer-Tablettenpresse, umfassend eine erfindungsgemäße Vorrichtung zum Kalibrieren und Abgleichen einer Messeinrichtung der Tablettenpresse.

Ein Ausführungsbeispiel der Erfindung wird nachfolgend anhand von Figuren näher erläutert. Es zeigen schematisch:
- Fig. 1: einen Teil einer Rundläuferpresse für Tabletten nach dem Stand der Technik in einer in die Zeichenebene abgewickelten Darstellung,
- Fig. 2: eine erfindungsgemäße Vorrichtung,
- Fig. 3: ein Diagramm mit von der Vorrichtung aus Figur 2 aufgenommen Messkurven,
- Fig. 4: ein Diagramm mit Messkurven ähnlich Figur 3 mit gegenüber einer Referenzkurve markierten, ausgewählten Abweichungen, und
- Fig. 5: ein Diagramm mit zeitabhängig gewonnenen Abweichungen aus Messkurven gemäß den Figuren 3 und 4.

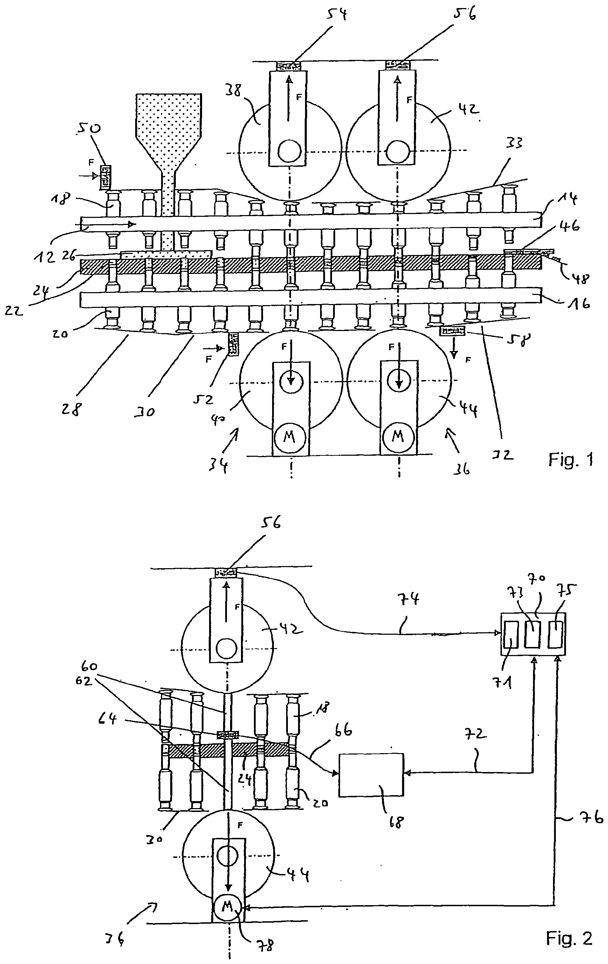

Fig. 1 zeigt den Aufbau einer an sich bekannten Rundläufer-Tablettenpresse. Dabei ist insbesondere der Rotor der Rundläufer-Tablettenpresse dargestellt, der von einem nicht dargestellten Drehantrieb um eine in der Regel vertikale Achse rotiert wird, wie durch den Pfeil 12 veranschaulicht. Der Rotor besitzt eine obere Stempelführung 14 und eine untere Stempelführung 16 zur Aufnahme von Oberstempeln 18 und Unterstempeln 20. Die Oberstempel 18 und Unterstempel 20 wirken mit Aufnahmen 22 einer Matrizenscheibe 24 zusammen, die zwischen den Stempelführungen 14, 16 angeordnet ist. Die Matrizenscheibe 24 kann einstückig ausgebildet sein oder aus einzelnen Matrizensegmenten bestehen. Bei den Aufnahmen 22 kann es sich um sogenannte Matrizenbohrungen handeln. In den Matrizenbohrungen können Matrizenhülsen angeordnet sein. Dies ist aber nicht zwingend erforderlich. Über eine Fülleinrichtung 26 wird den Aufnahmen 22 pulverförmiges Pressmaterial zugeführt. Die Ober- und Unterstempel 18, 20 werden durch Füllkurvenelemente 28, Dosierkurvenelemente 30, Ausstoßkurvenelemente 32 und Aufzugskurvenelemente 33 geführt. In Drehrichtung 12 des Rotors der Fülleinrichtung 26 nachgeordnet befinden sich eine Vordruckstation 34 und eine Hauptdruckstation 36. Die Vordruckstation 34 besitzt eine obere Vordruckrolle 38 und eine untere Vordruckrolle 40. Die Hauptdruckstation 36 besitzt entsprechend eine obere Hauptdruckrolle 42 und eine untere Hauptdruckrolle 44. Die Ober- und Unterstempel 18, 20 wirken mit den Druckrollen 38, 40, 42, 44 in an sich bekannter Weise zusammen, um das in die Aufnahmen 22 gefüllte Pressmaterial zu einer Tablette zu verpressen. In Drehrichtung 12 der Vor- und Hauptdruckstation 34, 36 nachgeordnet befindet sich ein Abstreifer 46, der zu diesem Zeitpunkt von den Unterstempeln 20 auf die Oberfläche der Matrizenscheibe 24 geschobene Tabletten einem Tablettenablauf 48 zuführt.

Die Rundläufertablettenpresse ist in dem gezeigten Beispiel mit mehreren Messsensoren ausgestattet, im Ausführungsbeispiel sind dies Kraftmesssensoren 50, 52, 54, 56, 58. Die Kraftmesssensoren messen im Betrieb der Rundläuferpresse auftretende Kräfte. So messen beispielsweise die im Bereich der Vor- und Hauptdruckstationen 34, 36 angeordneten Kraftmesssensoren 54, 56 die dort auftretenden Presskräfte, um so den ordnungsgemäßen Zustand der Rundläuferpresse und die ordnungsgemäße Qualität der hergestellten Tabletten zu überprüfen. Die jeweils wirkenden Kräfte sind in Fig. 1 durch die mit F bezeichneten Pfeile veranschaulicht. In der Regel umfassen Messeinrichtungen zur Messung dieser Kräfte neben den Kraftmesssensoren 50, 52, 54, 56, 58 jeweils einen in Fig. 1 nicht gezeigten Messverstärker.

In Fig. 2 ist eine erfindungsgemäße Vorrichtung zum Kalibrieren und Abgleichen von Messeinrichtungen dargestellt. In dem gezeigten Beispiel soll die im Bereich der Hauptdruckstation 36 angeordnete Kraftmesseinrichtung mit dem Kraftmesssensor 56 kalibriert und abgeglichen werden. Hierzu wird zwischen die obere und untere Druckrolle 42, 44 ein oberer und unterer Kalibrierstempel 60, 62 eingebracht, wobei zwischen dem oberen und unteren Kalibrierstempel 60, 62 ein Referenzkraftmesssensor 64 angeordnet ist. In seiner Ausgestaltung stimmt der Referenzkraftmesssensor 64 mit dem Kraftmesssensor 56 überein. Zwischen den Kalibrierstempeln 60, 62 und den zugeordneten Hauptdruckrollen 42, 44 besteht ein unmittelbarer Kontakt. Es ergibt sich ein unverfälschter Kraftfluss zwischen dem Kraftmesssensor 56 und dem zu diesem in Reihe geschalteten Referenzkraftsensor 64 unter Ausschluss des jeweils substituierten Ober- und Unterstempels 18, 20, so dass die den Kraftmesssensor 56 beaufschlagende Kraft F unverfälscht auch den zwischen den Kalibrierstempeln 60, 62 angeordneten Referenzkraftsensor 64 beaufschlagt.

Der Referenzkraftmesssensor 64 bildet gemeinsam mit dem mit ihm über eine Verbindung 66 verbundenen Referenzmessverstärker 68 eine Referenzmesseinrichtung 64, 68. Auch dem Kraftmesssensor 56 ist ein Messverstärker 71 zugeordnet, der in dem gezeigten Beispiel in eine Steuereinrichtung 70 der Rundläuferpresse integriert ist. Selbstverständlich kann der Messverstärker 71 auch außerhalb der Steuereinrichtung 70 angeordnet sein, insbesondere auch in dem Kraftmesssensor 56. Die Steuereinrichtung 70 kann Teil einer nicht dargestellten Maschinensteuerung der Tablettenpresse sein. Die Steuereinrichtung 70 umfasst weiterhin eine Vergleichseinrichtung 73 zum Vergleich von Messwerten und eine Speichereinrichtung 75 zur Speicherung von zumindest Messwerten. Der Kraftmesssensor 56 bildet ebenfalls gemeinsam mit dem Messverstärker 71 eine zu kalibrierende und abzugleichende Messeinrichtung 56, 71. Die Steuereinrichtung 70 besitzt in der Regel ein Bedien- und ein Steuerelement und steuert den gesamten Ablauf der Rundläuferpresse im Betrieb. Über eine erste Verbindung 72 ist die Steuereinrichtung 70 mit dem Messverstärker 68 der Referenzmesseinrichtung 64, 68 verbunden. Außerdem ist die Steuereinrichtung 70 mit dem Messverstärker 71 der Messeinrichtung 56, 71 verbunden. Über eine zweite Verbindung 74 ist die Steuereinrichtung 70 darüber hinaus mit dem zu kalibrierenden und abzugleichenden Kraftmesssensor 56 verbunden. Außerdem ist die Steuereinrichtung 70 über eine dritte Verbindung 76 mit einem Verstellmotor 78 für die Einstellung des vertikalen Abstands zwischen den Druckrollen 42, 44 verbunden.

Von einer Bedienperson wird das erfindungsgemäße Kalibrier- und Abgleichverfahren an der Steuereinrichtung 70 ausgelöst. Die Steuereinrichtung 70 steuert daraufhin über die dritte Verbindung 76 den Verstellmotor 78 so an, dass der vertikale Abstand zwischen den Druckrollen 42, 44 in einem Kraftbereich von beispielsweise 0 bis 100 kN schrittweise oder kontinuierlich verringert wird. Gleichzeitig werden der Maschinensteuerung 70 über die Verbindung 72, 74 bzw. ihre Verbindung zu den jeweiligen Messverstärkem 68, 71 die dabei aufgenommenen Messwerte der Referenzmesseinrichtung 64, 68 und der Messeinrichtung 56, 71 zugeführt. Die in die Steuereinrichtung 70 integrierte Vergleichseinrichtung 73 vergleicht diese Messwerte miteinander.

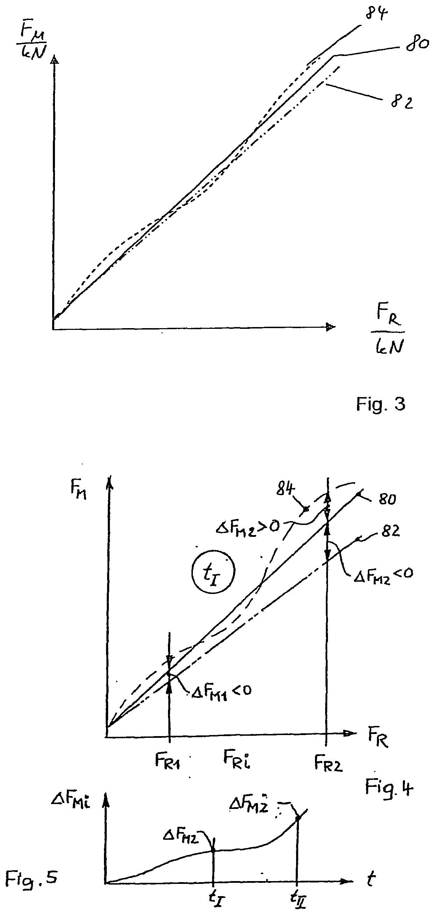

Insbesondere wird von der Steuereinrichtung 70 ein Kurvenverlauf aufgenommen, wie er beispielhaft in Fig. 3 gezeigt ist. Bei dem Bezugszeichen 80 ist ein linear proportionaler Kurvenverlauf, eine sogenannte Referenzkurve, der Referenzmesseinrichtung gezeigt. Aufgetragen sind in dem Diagramm auf der Abszisse die von der Steuereinrichtung 70 erzeugten Referenzmesswerte, insbesondere die durch die vertikale Verstellung der Druckrollen 42, 44 erzeugten Referenzkraftwerte F_{R} in kN. Auf der Ordinate sind ebenfalls in kN aufgetragen die zu den jeweiligen Referenzkraftwerten F_{R} zugehörigen von der zu kalibrierenden Messeinrichtung 56, 71 gemessenen Kraftwerte F_{M}, wobei die dargestellten Kraftverläufe 82 und 84 jeweils beispielhaft mögliche typische Abweichungen von der Referenzkurve 80 zeigen. Das Zustandekommen der Referenzkurve 80 wurde vorstehend bereits beschrieben. Bei gleicher Skalierung der beiden Achsen handelt es sich um eine Gerade mit einer Steigung von 45 Grad, die aufgrund geschilderter Umstände um einen bestimmten Betrag gegenüber dem Ursprung verschoben sein kann.

Es ist insbesondere in Fig. 4 zu erkennen, dass die Kurvenverläufe 82, 84 von der Referenzkurve 80 in unterschiedlicher Weise abweichen. Während der Kurvenverlauf 82 mit steigendem Referenzkraftwert F_{R} eine zum Betrag der Referenzkraft F_{R} linear proportionale negative Abweichung zeigt (z.B. ΔF_{M1} < 0 für die Stelle F_{R1} und ΔF_{M2} < 0 für die Stelle F_{R2}), d.h. der Kraftwert F_{M} ist systematisch kleiner als der Referenzkraftwert F_{R}, pendelt der Kurvenverlauf 84 um die Referenzkurve 80, d.h. die Kraftwerte F_{M} sind bereichsweise größer (z.B. ΔF_{M2} > 0 für die Stelle F_{R2}) oder kleiner als der jeweils zugeordnete Referenzkraftwert F_{R}, und die Abweichungsmaxima sind dabei unabhängig vom Betrag der zugeordneten Kraftwerte F_{M} (Figur 3) oder auch abhängig vom jeweiligen Betrag (z.B. Figur 4, Stelle F_{R2} gegenüber Stelle F_{R1}). Der Fachmann kann aus diesbezüglichen Kurvenverläufen 82, 84 Rückschlüsse auf deren Ursachen und den Zustand der Rundläufer-Tablettenpresse ziehen.

Die Kurvenverläufe 80, 82, 84 können in der Speichereinrichtung 75 der Steuereinrichtung 70 gespeichert werden. Mit Hilfe mathematischer Verfahren können die Kurvenverläufe 82, 84 jeweils an die Referenzkurve 80 innerhalb vorgegebener Toleranzgrenzen angepasst werden. Insbesondere kann eine erforderliche Neueinstellung der zu kalibrierenden Messeinrichtung 56, 71, beispielsweise des Messverstärkers 71 dieser Messeinrichtung 56, 71, berechnet werden. Diese für die Kalibrierung erforderliche Neueinstellung kann dann ebenfalls durch die Steuereinrichtung 70 vorgenommen werden. Beispielsweise kann der in Fig. 2 in die Steuereinrichtung 70 integrierte Messverstärker 71 der Messeinrichtung 56, 71 durch die Steuereinrichtung 70 neu eingestellt werden.

Die zu einem Kalibrierzeitpunkt t_{I} (Figur 4) oder zu einem späteren Kalibrierzeitpunkt t_{II} oder zu beliebigen weiteren zeitlich nachgelagerten Kalibrierzeitpunkten ermittelten entsprechenden Kurvenverläufe 82, 84 können in der Speichervorrichtung 75 der Steuereinrichtung 70 über längere Zeiträume abgespeichert werden. Aus diesen Kurvenverläufen lassen sich die Abweichungen ΔF_{M1}, ΔF_{M2} (allgemein: ΔF_{Mi}) zu bestimmten ausgezeichneten Referenzkraftwerten F_{R1}, F_{R2} (allgemein: F_{Ri}) auswählen (s. Figur 4) und/oder auslesen und in ihrer Zeitabhängigkeit (Zeitachse t) ermitteln und/oder auslesen und/oder darstellen (s. ΔF_{Mi} = f(t); Figur 5) und/oder zur Steuerung der Tablettenpresse verwenden. Aus dem Abweichungsverlauf ΔF_{Mi} = f(t) lassen sich zumindest tendenzielle Veränderungen der Tablettenpresse (z.B. Verschleiß, mangelhafte Gängigkeit miteinander im Eingriff befindlicher Bauteile, unzureichende Schmierung) erkennen und Wartungsintervalle bzw. Wartungszeitpunkte bestimmen oder es kann der Austausch von Bauteilen veranlasst werden.

## Patentansprüche

1. Vorrichtung zum Kalibrieren und Abgleichen einer Messeinrichtung (56, 71) einer Tablettenpresse, insbesondere einer Rundläufer-Tablettenpresse, umfassend mindestens eine Referenzmesseinrichtung (64, 68) und mindestens eine Steuereinrichtung (70), wobei Schnittstellen der Steuereinrichtung (70) mit Schnittstellen der Messeinrichtung (56, 71) und der Referenzmesseinrichtung (64, 68) verbunden sind, wobei die Steuereinrichtung (70) dazu ausgebildet ist, eine Mehrzahl von Referenzmessereignissen zu erzeugen und die zugehörigen Messwerte der Messeinrichtung (56, 71) und der Referenzmesseinrichtung (64, 68) aufzunehmen, wobei die Steuereinrichtung (70) weiterhin eine Vergleichseinrichtung umfasst, mit der die aufgenommenen Messwerte der Messeinrichtung (56, 71) und der Referenzmesseinrichtung (64, 68) miteinander verglichen werden können, und wobei die Steuereinrichtung (70) dazu ausgebildet ist, die Messeinrichtung (56, 71) abzugleichen, sofern eine unzulässige Abweichung zwischen den verglichenen Messwerten vorliegt, **dadurch gekennzeichnet, dass** die Steuereinrichtung (70) dazu ausgebildet ist, die Messeinrichtung (56, 71) durch Hinterlegung einer Anpassungsvorschrift für die Messergebnisse der Messeinrichtung (56, 71) abzugleichen, dass die Anpassungsvorschrift auf Grundlage des erfolgten Vergleichs in Form einer Kennlinie oder eines Kennfeldes automatisch erstellt und in der Steuereinrichtung (70) gespeichert wird, und dass die Messergebnisse der Messeinrichtung (56, 71) mit der Anpassungsvorschrift rechnerisch angepasst werden, so dass eine festgestellte Abweichung zwischen den Messwerten der Messeinrichtung (56, 71) und der Referenzmesseinrichtung (64, 68) kompensiert wird.

2. Vorrichtung nach Anspruch 1, **dadurch gekennzeichnet, dass** die Steuereinrichtung (70) dazu ausgebildet ist, die Messeinrichtung (56, 71) durch einen Eingriff in die Messergebnisse der Messeinrichtung (56, 71) abzugleichen.

3. Vorrichtung nach einem der Ansprüche 1 oder 2, **dadurch gekennzeichnet, dass** die Messeinrichtung (56, 71) und die Referenzmesseinrichtung (64, 68) Kraftmesseinrichtungen sind.

4. Vorrichtung nach einem der vorhergehenden Ansprüche, **dadurch gekennzeichnet, dass** die Steuereinrichtung (70) in die Messeinrichtung (56, 71) oder in die Referenzmesseinrichtung (64, 68) integriert ist.

5. Vorrichtung nach einem der vorhergehenden Ansprüche, **dadurch gekennzeichnet, dass** die Steuereinrichtung (70) dazu ausgebildet ist, aus den aufgenommenen Messwerten der Messeinrichtung (56, 71) und der Referenzmesseinrichtung (64, 68) jeweils eine Messkurve zu erstellen und die Messeinrichtung (56, 71) so abzugleichen, dass die Messkurven nach dem Abgleich innerhalb vorgegebener Toleranzgrenzen übereinstimmen.

6. Verfahren zum Kalibrieren und Abgleichen einer Messeinrichtung einer Tablettenpresse, insbesondere einer Rundläufer-Tablettenpresse, umfassend die Schritte:
- mindestens eine Referenzmesseinrichtung (64, 68) wird bereitgestellt,
- von einer Steuereinrichtung (70) wird eine Mehrzahl von Referenzmessereignissen erzeugt und die zugehörigen Messwerte der Messeinrichtung (56, 71) und der Referenzmesseinrichtung (64, 68) werden von der Steuereinrichtung (70) aufgenommen,
- mittels der Steuereinrichtung (70) werden die aufgenommenen Messwerte der Messeinrichtung (56, 71) und der Referenzmesseinrichtung (64, 68) miteinander verglichen,
- sofern eine unzulässige Abweichung zwischen den verglichenen Messwerten festgestellt wird, wird die Messeinrichtung (56, 71) von der Steuereinrichtung (70) durch Hinterlegung einer Anpassungsvorschrift für die Messergebnisse der Messeinrichtung (56, 71) abgeglichen, wobei die Anpassungsvorschrift auf Grundlage des erfolgten Vergleichs in Form einer Kennlinie oder eines Kennfeldes automatisch erstellt und in der Steuereinrichtung (70) gespeichert wird, und wobei die Messergebnisse der Messeinrichtung (56, 71) mit der Anpassungsvorschrift rechnerisch angepasst werden, so dass die festgestellte Abweichung zwischen den Messwerten der Messeinrichtung (56, 71) und der Referenzmesseinrichtung (64, 68) kompensiert wird.

7. Verfahren nach Anspruch 6, **dadurch gekennzeichnet, dass** die Steuereinrichtung (70) die Messeinrichtung (56, 71) durch einen Eingriff in die Messergebnisse der Messeinrichtung (56, 71) abgleicht.

8. Verfahren nach einem der Ansprüche 6 oder 7, **dadurch gekennzeichnet, dass** die Messeinrichtung (56, 71) und die Referenzmesseinrichtung (64, 68) Kraftmesseinrichtungen sind.

9. Verfahren nach einem der Ansprüche 6 bis 8, **dadurch gekennzeichnet, dass** die Steuereinrichtung (70) Teil der Maschinensteuerung der Tablettenpresse ist.

10. Verfahren nach einem der Ansprüche 6 bis 8, **dadurch gekennzeichnet, dass** die Steuereinrichtung (70) in die Messeinrichtung (56, 71) oder in die Referenzmesseinrichtung (64, 68) integriert ist.

11. Verfahren nach einem der Ansprüche 6 bis 10, **dadurch gekennzeichnet, dass** von der Steuereinrichtung (70) aus den aufgenommenen Messwerten der Messeinrichtung (56, 71) und der Referenzmesseinrichtung (64, 68) jeweils eine Messkurve erstellt wird und die Messeinrichtung (56, 71) von der Steuereinrichtung (70) so abgeglichen wird, dass die Messkurven nach dem Abgleich innerhalb vorgegebener Toleranzgrenzen übereinstimmen.

12. Verfahren nach einem der Ansprüche 6 bis 11, **dadurch gekennzeichnet, dass** die Kalibrierung und Abgleichung der Messeinrichtung (56, 71) in Abhängigkeit von mindestens einer im Betrieb der Tablettenpresse auftretenden Einflussgröße erfolgt.

13. Verfahren nach Anspruch 12, **dadurch gekennzeichnet, dass** die mindestens eine Einflussgröße empirisch oder theoretisch oder messtechnisch ermittelt wird.

14. Verfahren nach einem der Ansprüche 12 oder 13, **dadurch gekennzeichnet, dass** die Einflussgröße eine im Betrieb der Tablettenpresse auftretende Temperaturänderung oder ein im Betrieb der Tablettenpresse auftretender Verschleiß ist.

15. Verfahren nach einem der Ansprüche 6 bis 14, **dadurch gekennzeichnet, dass** nach einem erfolgten Abgleich der Messeinrichtung (56, 71) das Verfahren nach einem der Ansprüche 7 bis 14 mindestens ein weiteres Mal durchgeführt wird.

16. Verfahren nach einem der vorhergehenden Ansprüche, **dadurch gekennzeichnet, dass** das Verfahren nach einem der Ansprüche 7 bis 15 in regelmäßigen Zeitabständen wiederholt wird, so dass tendenzielle Veränderungen der Messwerte der Messeinrichtung (56, 71) ermittelt werden.

17. Verfahren nach Anspruch 16, **dadurch gekennzeichnet, dass** eine Langzeitspeicherung der Ergebnisse des Verfahrens zum Kalibrieren und Abgleichen erfolgt.

## Claims

1. A device for calibrating and adjusting a measuring apparatus (56, 71) of a tablet press, in particular a rotary tablet press, comprising at least one reference measurement apparatus (64, 68) and at least one control apparatus (70), wherein interfaces of the control apparatus (70) are connected to interfaces of the measuring apparatus (56, 71) and of the reference measurement apparatus (64, 68), wherein the control apparatus (70) is designed to generate multiple reference measurement results and to receive the associated measured values of the measuring apparatus (56, 71) and of the reference measurement apparatus (64, 68), wherein the control apparatus (70) further comprises a comparison apparatus, by means of which the received measured values of the measuring apparatus (56, 71) and of the reference measurement apparatus (64, 68) can be compared with one another, and wherein the control apparatus (70) is designed to adjust the measuring apparatus (56, 71) if there is an impermissible deviation between the compared measured values, **characterized in that** the control apparatus (70) is designed to adjust the measuring apparatus (56, 71) by providing an adjustment rule for the measurement results of the measuring apparatus (56, 71), **in that** the adjustment rule is automatically created in the form of a characteristic curve or characteristic map based on the comparison and is stored in the control apparatus (70), and **in that** the measurement results of the measuring apparatus (56, 71) are computationally adjusted by means of the adjustment rule, such that an identified deviation between the measured values of the measuring apparatus (56, 71) and of the reference measurement apparatus (64, 68) is compensated for.

2. The device according to claim 1, **characterized in that** the control apparatus (70) is designed to adjust the measuring apparatus (56, 71) by intervening in the measurement results of the measuring apparatus (56, 71).

3. The device according to any one of claims 1 or 2, **characterized in that** the measuring apparatus (56, 71) and the reference measurement apparatus (64, 68) are forcemeasuring apparatuses.

4. The device according to any one of the preceding claims, **characterized in that** the control apparatus (70) is integrated in the measuring apparatus (56, 71) or in the reference measurement apparatus (64, 68).

5. The device according to any one of the preceding claims, **characterized in that** the control apparatus (70) is designed to produce a measurement curve from the received measured values of the measuring apparatus (56, 71) and of the reference measurement apparatus (64, 68) in each case and to adjust the measuring apparatus (56, 71) such that the measurement curves match within predefined tolerance limits after the adjustment.

6. A method for calibrating and adjusting a measuring apparatus of a tablet press, in particular a rotary tablet press, comprising the following steps:
- at least one reference measurement apparatus (64, 68) is provided,
- multiple reference measurement results are generated by a control apparatus (70) and the associated measured values of the measuring apparatus (56, 71) and of the reference measurement apparatus (64, 68) are received by the control apparatus (70),
- the received measured values of the measuring apparatus (56, 71) and of the reference measurement apparatus (64, 68) are compared with one another by means of the control apparatus (70),
- if an impermissible deviation is identified between the compared measured values, the measuring apparatus (56, 71) is adjusted by the control apparatus (70) in that same provides an adjustment rule for the measurement results of the measuring apparatus (56, 71), wherein the adjustment rule is automatically created in the form of a characteristic curve or characteristic map based on the comparison and is stored in the control apparatus (70), and wherein the measurement results of the measuring apparatus (56, 71) are computationally adjusted by means of the adjustment rule, such that an identified deviation between the measured values of the measuring apparatus (56, 71) and of the reference measurement apparatus (64, 68) is compensated for.

7. The method according to claim 6, **characterized in that** the control apparatus (70) adjusts the measuring apparatus (56, 71) by intervening in the measurement results of the measuring apparatus (56, 71).

8. The method according to any one of claims 6 to 7, **characterized in that** the measuring apparatus (56, 71) and the reference measurement apparatus (64, 68) are forcemeasuring apparatuses.

9. The method according to any one of claims 6 to 8, **characterized in that** the control apparatus (70) is part of the control system of the tablet press.

10. The method according to any one of claims 6 to 8, **characterized in that** the control apparatus (70) is integrated in the measuring apparatus (56, 71) or in the reference measurement apparatus (64, 68).

11. The method according to any one of claims 6 to 10, **characterized in that** a measurement curve is produced by the control apparatus (70) from the received measured values of the measuring apparatus (56, 71) and of the reference measurement apparatus (64, 68) in each case and the measuring apparatus (56, 71) is adjusted by the control apparatus (70) such that the measurement curves match within predefined tolerance limits after the adjustment.

12. The method according to any one of claims 6 to 11, **characterized in that** the calibration and adjustment of the measuring apparatus (56, 71) takes place depending on at least one influencing variable that occurs during operation of the tablet press.

13. The method according to claim 12, **characterized in that** the at least one influencing variable is determined empirically or theoretically or metrologically.

14. The method according to any one of claims 12 or 13, **characterized in that** the influencing variable is a temperature change that occurs during operation of the tablet press or wear that occurs during operation of the tablet press.

15. The method according to any one of claims 6 to 14, **characterized in that**, after the measuring apparatus (56, 71) has been adjusted, the method according to any one of claims 7 to 14 is carried out at least one more time.

16. The method according to any one of the preceding claims, **characterized in that** the method according to any one of claims 7 to 15 is repeated at regular time intervals, such that tendential changes in the measured values of the measuring apparatus (56, 71) are identified.

17. The method according to claim 16, **characterized in that** long-term storage of the results of the calibration and adjustment method takes place.

## Revendications

1. Dispositif d'étalonnage et d'ajustement d'un appareil de mesure (56, 71) d'une presse à comprimés, en particulier d'une presse à comprimés à table rotative, comportant au moins un appareil de mesure de référence (64, 68) et au moins un appareil de commande (70), dans lequel des interfaces de l'appareil de commande (70) sont reliées à des interfaces de l'appareil de mesure (56, 71) et de l'appareil de mesure de référence (64, 68), dans lequel l'appareil de commande (70) est conçu pour générer une pluralité d'événements de mesure de référence et pour enregistrer les valeurs de mesure correspondantes de l'appareil de mesure (56, 71) et de l'appareil de mesure de référence (64, 68), dans lequel l'appareil de commande (70) comporte en outre un appareil de comparaison, avec lequel les valeurs de mesure enregistrées de l'appareil de mesure (56, 71) et de l'appareil de mesure de référence (64, 68) peuvent être comparées entre elles, et dans lequel l'appareil de commande (70) est conçu pour ajuster l'appareil de mesure (56, 71) dans la mesure où un écart non autorisé apparaît entre les valeurs de mesure comparées, **caractérisé en ce que** l'appareil de commande (70) est conçu pour ajuster l'appareil de mesure (56, 71) par dépôt d'une règle d'adaptation pour les résultats de mesure de l'appareil de mesure (56, 71), **en ce que** la règle d'adaptation est établie automatiquement sous la forme d'une courbe caractéristique ou d'un champ caractéristique sur la base de la comparaison effectuée et enregistrée dans l'appareil de commande (70), et **en ce que** les résultats de mesure de l'appareil de mesure (56, 71) sont adaptés par calcul avec la règle d'adaptation, de manière à compenser un écart constaté entre les valeurs de mesure de l'appareil de mesure (56, 71) et de l'appareil de mesure de référence (64, 68).

2. Dispositif selon la revendication 1, **caractérisé en ce que** l'appareil de commande (70) est conçu pour ajuster l'appareil de mesure (56, 71) par une intervention dans les résultats de mesure de l'appareil de mesure (56, 71).

3. Dispositif selon l'une des revendications 1 ou 2, **caractérisé en ce que** l'appareil de mesure (56, 71) et l'appareil de mesure de référence (64, 68) sont des appareils de mesure de force.

4. Dispositif selon l'une des revendications précédentes, **caractérisé en ce que** l'appareil de commande (70) est intégré dans l'appareil de mesure (56, 71) ou dans l'appareil de mesure de référence (64, 68).

5. Dispositif selon l'une des revendications précédentes, **caractérisé en ce que** l'appareil de commande (70) est conçu pour établir respectivement une courbe de mesure à partir des valeurs de mesure enregistrées de l'appareil de mesure (56, 71) et de l'appareil de mesure de référence (64, 68) et pour ajuster l'appareil de mesure (56, 71) de manière à ce que les courbes de mesure coïncident dans des limites de tolérance prédéfinies après l'ajustement.

6. Procédé d'étalonnage et d'ajustement d'un appareil de mesure d'une presse à comprimés, en particulier d'une presse à comprimés à table rotative, comportant les étapes suivantes :
- mise à disposition d'au moins un appareil de mesure de référence (64, 68),
- génération d'une pluralité d'événements de mesure de référence par un appareil de commande (70) et enregistrement des valeurs de mesure correspondantes de l'appareil de mesure (56, 71) et de l'appareil de mesure de référence (64, 68) par l'appareil de commande (70),
- comparaison des valeurs de mesure enregistrées de l'appareil de mesure (56, 71) et de l'appareil de mesure de référence (64, 68) entre elles au moyen de l'appareil de commande (70),
- dans la mesure où un écart non autorisé est constaté entre les valeurs de mesure comparées, ajustement de l'appareil de mesure (56, 71) par l'appareil de commande (70) par dépôt d'une règle d'adaptation pour les résultats de mesure de l'appareil de mesure (56, 71), la règle d'adaptation étant établie automatiquement sous la forme d'une courbe caractéristique ou d'un champ caractéristique sur la base de la comparaison effectuée et enregistrée dans l'appareil de commande (70), et les résultats de mesure de l'appareil de mesure (56, 71) étant adaptés par calcul avec la règle d'adaptation, de manière à compenser les écarts constatés entre les valeurs de mesure de l'appareil de mesure (56, 71) et de l'appareil de mesure de référence (64, 68).

7. Procédé selon la revendication 6, **caractérisé en ce que** l'appareil de commande (70) ajuste l'appareil de mesure (56, 71) par une intervention dans les résultats de mesure de l'appareil de mesure (56, 71).

8. Procédé selon l'une des revendications 6 ou 7, **caractérisé en ce que** l'appareil de mesure (56, 71) et l'appareil de mesure de référence (64, 68) sont des appareils de mesure de force.

9. Procédé selon l'une des revendications 6 à 8, **caractérisé en ce que** l'appareil de commande (70) fait partie de la commande de machine de la presse à comprimés.

10. Procédé selon l'une des revendications 6 à 8, **caractérisé en ce que** l'appareil de commande (70) est intégré dans l'appareil de mesure (56, 71) ou dans l'appareil de mesure de référence (64, 68).

11. Procédé selon l'une des revendications 6 à 10, **caractérisé en ce qu'**une courbe de mesure est établie respectivement par l'appareil de commande (70) à partir des valeurs de mesure enregistrées de l'appareil de mesure (56, 71) et de l'appareil de mesure de référence (64, 68) et l'appareil de mesure (56, 71) est ajusté de telle façon par l'appareil de commande (70), que les courbes de mesure coïncident dans des limites de tolérance prédéfinies après l'ajustement.

12. Procédé selon l'une des revendications 6 à 11, **caractérisé en ce que** l'étalonnage et l'ajustement de l'appareil de mesure (56, 71) sont effectués en fonction d'au moins une grandeur d'influence survenant dans le fonctionnement de la presse à comprimés.

13. Procédé selon la revendication 12, **caractérisé en ce que** l'au moins une grandeur d'influence est déterminée empiriquement ou théoriquement ou par une technique de mesure.

14. Procédé selon l'une des revendications 12 ou 13, **caractérisé en ce que** la grandeur d'influence est une variation de température survenant dans le fonctionnement de la presse à comprimés ou une usure survenant dans le fonctionnement de la presse à comprimés.

15. Procédé selon l'une des revendications 6 à 14, **caractérisé en ce qu'**après un ajustement effectué de l'appareil de mesure (56, 71), le procédé selon l'une des revendications 7 à 14 est mis en œuvre au moins une nouvelle fois.

16. Procédé selon l'une des revendications précédentes, **caractérisé en ce que** le procédé selon l'une des revendications 7 à 15 est répété à des intervalles temporels réguliers, de manière à déterminer des variations tendancielles des valeurs de mesure de l'appareil de mesure (56, 71).

17. Procédé selon la revendication 16, **caractérisé en ce qu'**un enregistrement à long terme des résultats du procédé d'étalonnage et d'ajustement est effectué.
